# EUROPEAN PATENT APPLICATION

(11) **EP 1 526 346 A2**
(43) Date of publication of application: **27.04.2005**
(21) Application number: 04077876.3
(22) Date of filing: 19.10.2004
(51) Int. Cl.: F25B 13/00, F25B 49/02

(54) **System and method for controlling air conditioner**

(30) Priority: 20.10.2003 KR 2003072992
(71) Applicant: LG Electronics Inc., Seoul 150-875 (KR)
(72) Inventor: Sung, Chun Kim, c/o Hangaram Apt., Seoul (KR); Jong, Han Park, c/o 901-604 Joogong Apt., Gwangmyeong-si, Gyeonggi-do (KR); Sung, Oh Choi, c/o 411 dong-208ho, Gwangmyeong-si, Gyeonggi-do (KR); Young, Min Park, c/o 109-1203 Sorae Maeul Poongrim, Incheon-si (KR); Yang, Dong Jun, c/o 101-1402 Mapo Dacrim Apt., Seoul (KR); Lee, Yoon Been, c/o I-1110 Samik Apt., Kangnam-gu, Seoul (KR); Hwang, Il Nahm, c/o 203-404 Joogong Apt., Ansan-si, Gyeonggi-do (KR); Yoon, Seok Ho, c/o 104-1602 Donga Apt., Seoul (KR)
(74) Representative: Ekström, Nils

(57) **Abstract**

A system for controlling an air conditioner includes a plurality of outdoor units each having at least one compressor and an outdoor heat exchanger, an indoor unit connected to the outdoor units by a refrigerant tube, the indoor unit having an indoor heat exchanger, and a pressure regulating tube for equalizing pressure according to an operation mode. The pressure regulating tube is connected between the outdoor units.

## Description

### BACKGROUND OF THE INVENTION

### Field of the Invention

The present invention relates to a system and method for controlling an air conditioner, and more particularly, to a system and method for controlling an air conditioner, which can uniformly maintain high and low pressures for respective cooling and heating modes by disposing a pressure regulating tube between main and sub outdoor heat exchangers.

The present invention further relates to a system and method for controlling an air conditioner that can prevent a liquid refrigerant from one-sidedly flowing to one of main and sub compressors by controlling the air conditioner based on an exhaust temperature of the compressors and an exhaust temperature according to an environmental condition.

### Description of the Related Art

Generally, an air conditioner can be classified according to its function into a cooling-only type, a heating-only type, and a cooling-heating type. The air conditioner can be further classified according to its unit constitution into an integral type where a cooking unit and a heat discharge unit are integrated and a separation type where a cooling unit is disposed at an indoor and heat discharge and compressing units are disposed at an outdoor.

The separation type includes a multi-type where more than two indoor units are connected to a singe outdoor unit to control air in a plurality of indoor spaces.

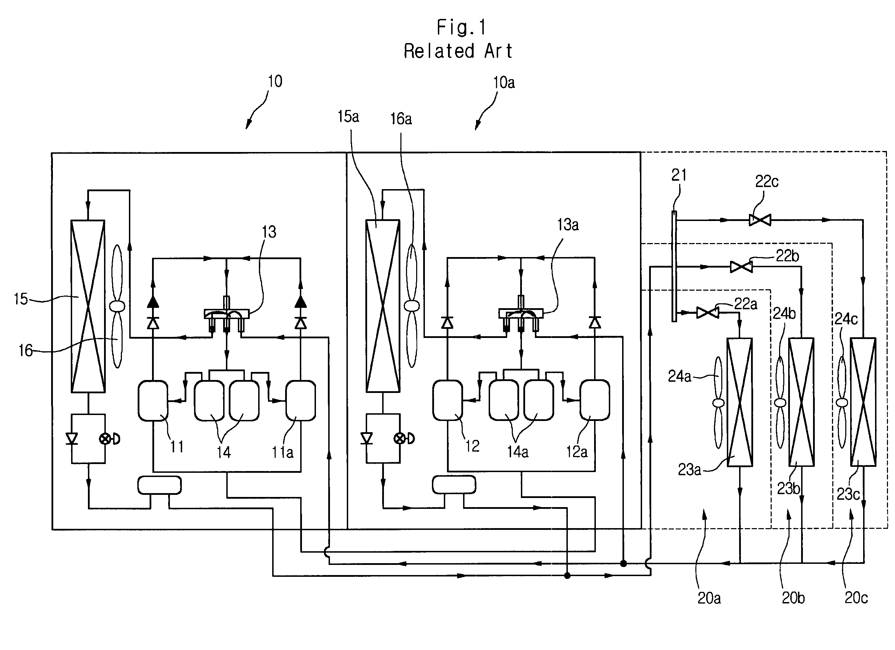

Fig. 1 shows a prior multi-type air conditioner.

As shown in the drawing, a prior multi-type air conditioner comprises a plurality of indoor units 20a, 20b and 20c disposed in the respective indoors and an outdoor unit. The air conditioner can be selectively operated in cooling and heating modes.

The outdoor unit is divided into a main outdoor unit 10 and a sub outdoor unit 10a. The main outdoor unit 10 comprises an inverter compressor 11 for varying a driving RPM by varying an operating frequency, a constant compressor 11a driven constantly, an accumulator 14 for separating liquid, a four-way valve 13, a condenser 15 for heat-exchanging, and an outdoor fan 16. The sub outdoor unit 10a has an identical structure to the main outdoor unit 10.

Each of the indoor units 20a, 20b and 20c comprises a dispenser 21, an expansion valve 22a, (22b and 22c), an indoor heat exchangers 23a (23b and 23c), and an indoor fan 24a (24b and 24c) .

The heating and cooling modes of the above-described air conditioner will be described hereinafter.

In the cooling mode, as shown in Fig. 1, gaseous refrigerant introduced from the indoor heating exchangers 23a, 23b and 23c into the compressors 11, 11a, 12 and 12a of the main and sub outdoor units 10 and 10a is compressed into a high-temperature/high-pressure state by the compressors 11, 11a, 12 and 12a and is discharged to outdoor heat exchangers 15 and 15a through the four-way valves 13 and 13a that are converted for realizing a cooling cycle.

The refrigerant discharged into the main and sub outdoor heat exchangers 15 and 15a is phase-changed into a high-temperature/high-pressure liquid state by being heat-exchanged with outdoor air introduced into the outdoor units 10 and 10a by the outdoor fans 16 and 16a.

The phase-changed refrigerant is directed to the expansion valves 22a, 22b and 22c of the indoor units 20a, 20b and 20c through the dispenser 21.

The refrigerant directed to the expansion valves 22a, 22b and 22c is changed into a low-temperature/low-pressure liquid state and is then directed to the indoor heat exchangers 23a, 23b and 23c.

The refrigerant directed to the indoor heat exchangers 23a, 23b and 23c is heat-exchanged with air around the heat exchangers to be phase-changed into a low-temperature/low-pressure gaseous state and is then introduced into the compressors 11, 11a, 12 and 12a through the four way valves 13 and 13a.

The refrigerant pressure-reduced through the expansion valves 22a, 22b and 22c is heat-exchanged in the respectively heat exchangers 23a, 23b and 23c, in the course of which the ambient air is changed into cool air and is then discharged into the indoors by the indoor fans 24a, 24b and 24c, completing a cycle of cooling process.

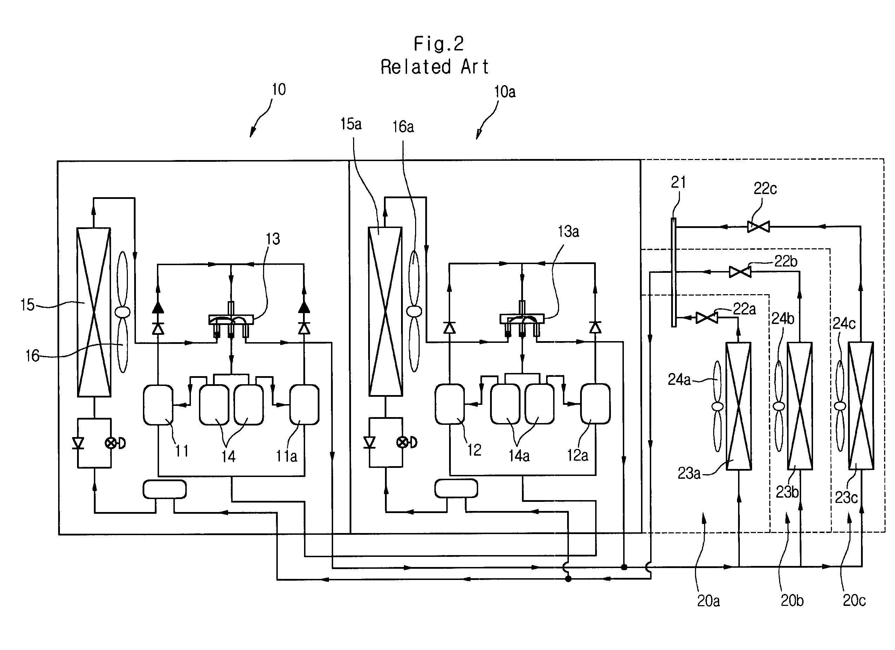

The heating mode is operated in an opposite cycle to that of the cooling mode. That is, as shown in Fig. 2, low-temperature/low-pressure gaseous refrigerant introduced from the outdoor heating exchangers (condensers) 15 and 15a into the compressors 11, 11a, 12 and 12a of the main and sub outdoor units 10 and 10a is compressed into a high-temperature/high-pressure gaseous state by the compressors 11, 11a, 12 and 12a and is discharged to the indoor heat exchangers 23a, 23b and 23c through the four-way valves 13 and 13a that are converted for realizing a heating cycle. The refrigerant discharged into the indoor heat exchangers 23a, 23b and 23c is phase-changed into a high-temperature/high-pressure liquid state by being heat-exchanged with indoor air. The phase-changed refrigerant is directed to the expansion valves 22a, 22b and 22c, in the course of which, the ambient air is changed into warm air by being heat-exchanged with the high-temperature/high-pressure refrigerant and is then discharged into the indoors to increase the temperature of the indoor air.

The refrigerant directed to the expansion valves 22a, 22b and 22c is changed into a low-temperature/low-pressure liquid state and is then directed to the outdoor heat exchangers 15 and 15a. The refrigerant directed to the outdoor heat exchangers 15 and 15a is heat-exchanged with air introduced into the main and sub outdoor units 10 and 10a to be phase-changed into a low-temperature/low-pressure gaseous state and is then introduced into the compressors 11, 11a, 12 and 12a through the four way valves 13 and 13a.

However, in the above-described heating mode, as shown in Fig. 2, since there is a difference in a flow rate of the refrigerated between the inverter compressor 11 of the main outdoor unit 10 and the constant compressor 12 of the outdoor unit 10a, a pressure difference between the main outdoor heat exchanger 15 and the sub outdoor heat exchanger 15a is incurred, whereby frost may be formed on the main outdoor heat exchanger 15 that is relatively low in the pressure, thereby deteriorating the heat-exchange efficiency.

The deterioration of the heat-exchange efficiency deteriorates the heating capability of the indoor units 20a, 20b and 20c, thereby deteriorating the reliability of the air conditioner.

Furthermore, since the refrigerant of the heat exchanger is accumulated in the accumulator, the liquid refrigerant is inclined into one of the main and sub compressors. This may cause the compressors to be damaged.

### SUMMARY OF THE INVENTION

Accordingly, the present invention is directed to a system and method for controlling an air conditioner, which substantially obviate one or more problems due to limitations and disadvantages of the related art.

It is a first object of the present invention to provide a system and method for controlling an air conditioner, which can improve the reliability of the air conditioner by preventing frost from being formed on the outdoor heat exchanger.

It is a second object of the present invention to provide a system and method for controlling an air conditioner, which can prevent liquid refrigerant from being one-sidedly flowing to one of main and sub compressors, thereby preventing the compressor from being damaged.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a system for controlling an air conditioner, comprising: a plurality of outdoor units each having at least one compressor and an outdoor heat exchanger; an indoor unit connected to the outdoor units by a refrigerant tube, the indoor unit having an indoor heat exchanger; and a pressure regulating tube for equalizing pressure according to an operation mode, the pressure regulating tube being connected between the outdoor units.

In another aspect of the present invention, there is provided a method for controlling an air conditioner, comprising the steps of: determining if a compressor is driven for more than a predetermined time; measuring a discharge temperature of the compressor when the compressor is driven for more than the predetermined time; comparing the measured temperature with a predetermined temperature; and controlling an opening of an electronic expansion valve is controlled such that the discharge temperature can be increased to be higher than a current super heating when the measured temperature is lower than the predetermined temperature.

In another aspect of the present invention, there is provided a method for controlling an air conditioner, comprising the steps of: determining if a compressor is driven for more than a predetermined time; measuring a discharge temperature of the compressor when the compressor is driven for more than the predetermined time; comparing the measured temperature with a temperature predetermined according to an outdoor temperature; and controlling an opening of an electronic expansion valve is controlled such that the discharge temperature can be increased to be higher than a current super heating when the measured temperature is lower than the predetermined temperature.

In still another aspect of the present invention, there is provided a method for controlling an air conditioner, comprising the steps of: determining if a compressor is driven for more than a predetermined time; measuring a discharge temperature of the compressor when the compressor is driven for more than the predetermined time; comparing the measured temperature with a temperature predetermined according to a vaporizing temperature; and controlling an opening of an electronic expansion valve is controlled such that the discharge temperature can be increased to be higher than a current super heating when the measured temperature is lower than the predetermined temperature.

In still yet another aspect of the present invention, there is provided a method for controlling an air conditioner, comprising the steps of: driving a first compressor; determining if the first compressor is driven for more than a predetermined time; measuring a discharge temperature of the first compressor when the first compressor is driven for more than the predetermined time; comparing the measured temperature with a predetermined temperature; replacing the first compressor with a second compressor when the measured temperature is lower than the predetermined temperature; and vaporizing liquid refrigerant in the first compressor by pre-heating liquid refrigerant in the first compressor.

According to the present invention, as the pressure regulating tube is disposed between the main outdoor heat exchanger and the sub outdoor heat exchanger, the formation of the frost on the main outdoor heat exchanger can prevented, thereby improving the reliability of the air conditioner.

That is, the pressure regulating tube equalizes the refrigerant pressures directed to the main and sub outdoor heat exchangers, the frost is not formed on the main outdoor heat exchanger, improving the heat exchange efficiency and the reliability of the air conditioner.

In addition, after the main and sub outdoor compressors are driven for a predetermined time, the one-sided flow of the refrigerant to one of the main and sub compressors can be prevented by control factors such as the discharge temperature of the compressors, the outdoor temperature, and/or the vaporizing temperature, thereby preventing the compressors from being damaged.

Furthermore, since the equal refrigerant pressure is applied to both the main and sub sides, an effect where a capacity of the sub side is increased can be obtained.

In addition, since amounts of the liquid refrigerant accumulated in the accumulator can be equalized to each other by the pressure regulating tube, the reliability of the air conditioner can be further improved.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention, are incorporated in and constitute a part of this application, illustrate embodiments of the invention and together with the description serve to explain the principle of the invention. In the drawings:

Fig. 1 is a schematic view illustrating a cooling cycle of a multi air conditioner according to the prior art;

Fig. 2 is a schematic view illustrating a heating cycle of a multi air conditioner according to the prior art;

Figs. 3 and 4 are schematic views of a multi air conditioner according to an embodiment of the present invention;

Figs. 5a and 5b are schematic views illustrating a pressure regulating process between main and sub outdoor heat exchangers through a pressure regulating tube in a cooling mode according to an embodiment of the present invention;

Figs. 6a and 6b are schematic views illustrating a pressure regulating process between main and sub outdoor heat exchangers through a pressure regulating tube in a heating mode according to an embodiment of the present invention;

Fig. 7 is a flowchart illustrating a method for preventing liquid refrigerant from one-sidedly flow to one of main and sub compressors in a heating mode by comparing a discharge temperature of a compressor driven for above a predetermined time with a predetermined discharge temperature according to a first embodiment of the present invention;

Fig. 8 is a graph illustrating a discharge temperature considering an outdoor temperature;

Fig. 9 is a flowchart illustrating a method for preventing liquid refrigerant from one-sidedly flow to one of main and sub compressors in a heating mode by comparing a discharge temperature of a compressor driven for above a predetermined time with a discharge temperature predetermined according to an outdoor temperature according to a second embodiment of the present invention;

Fig. 10 is a graph illustrating a discharge temperature considering a vaporizing temperature;

Fig. 11 is a flowchart illustrating a method for preventing liquid refrigerant from one-sidedly flow to one of main and sub compressors in a heating mode by comparing a discharge temperature of a compressor driven for above a predetermined time with a discharge temperature predetermined according to a vaporizing temperature according to a third embodiment of the present invention; and

Fig. 12 is a flowchart illustrating a method for preventing liquid refrigerant from one-sidedly flow to one of main and sub compressors in a heating mode by comparing a discharge temperature of a compressor driven for above a predetermined time with a discharge predetermined discharge temperature according to a fourth embodiment of the present invention;

### DETAILED DESCRIPTION OF THE INVENTION

Reference will now be made in detail to the preferred embodiments of the present invention, examples of which are illustrated in the accompanying drawings.

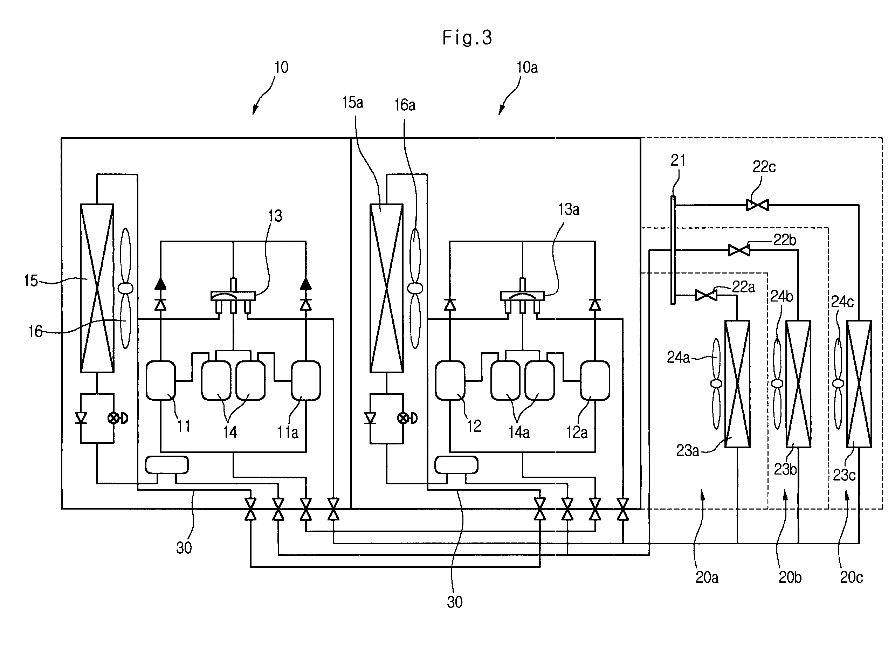

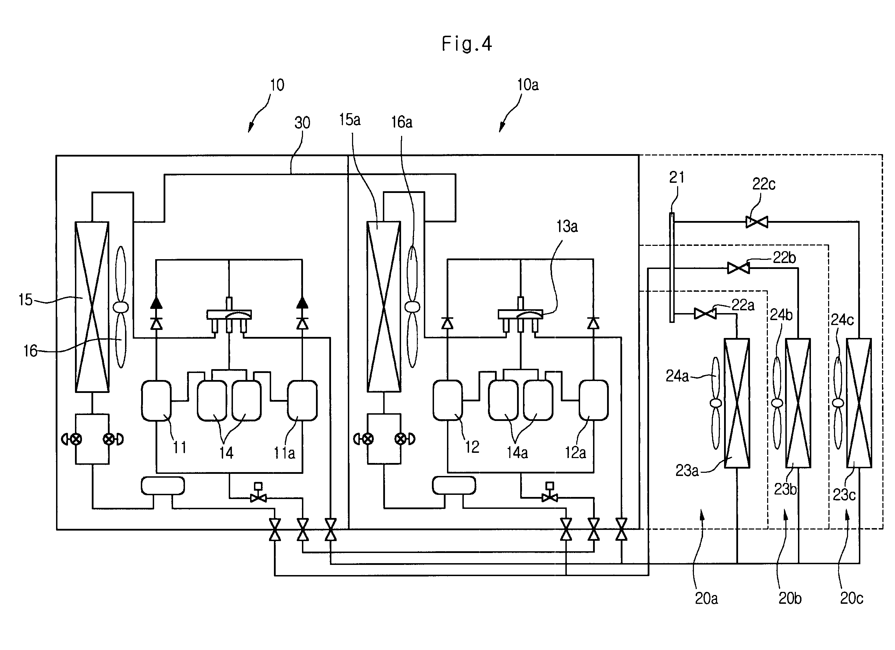

Figs. 3 and 4 shows schematic views of a multi air conditioner according to an embodiment of the present invention;

As shown in the drawings, the inventive multi air conditioner comprises main and sub outdoor units 10 and 10a having compressors 11 and 11a, 12 and 12a, respectively and main and sub outdoor heat exchangers 15 and 15a; a plurality of outdoor units 20a, 20b, and 20c; and a pressure regulating tube 30 connected between the main outdoor heat exchanger 15 and the sub outdoor heat exchanger 15a to uniformly maintain the pressure in cooling and heating modes.

In the heating mode, there is a difference in a refrigerant amount between the inverter compressor 11 of the main outdoor unit 10 and the constant compressor 12 of the sub outdoor unit 10a. Therefore, a pressure level of the main outdoor heat exchanger 15 becomes lower than that of the sub outdoor heat exchanger 15a.

Accordingly, frost may be formed on the main outdoor heat exchanger 15, thereby deteriorating the exchange efficiency and the reliability of the air conditioner. In order to prevent this, the pressure regulating tube 30 is disposed between the main outdoor heat exchanger 15 and the sub outdoor heat exchanger 15a to constantly maintain the pressure in the cooling and heating modes.

The pressure regulating tube is connected between refrigerant tubes extending from rear ends of the heat exchangers 15 and 15a when low pressure is formed in the heating mode.

In addition, the pressure regulating tube is connected between refrigerant tubes extending from front ends of the heat exchangers 15 and 15a where high pressure is formed in the cooling mode.

A diameter of the pressure regulating tube 30 is designed to be less than those of the refrigerant tubes, being greater than 3/4 inch.

The pressure regulating process using the pressure regulating tube disposed between the main and sub outdoor heat exchangers 15 and 15a will be described hereinafter.

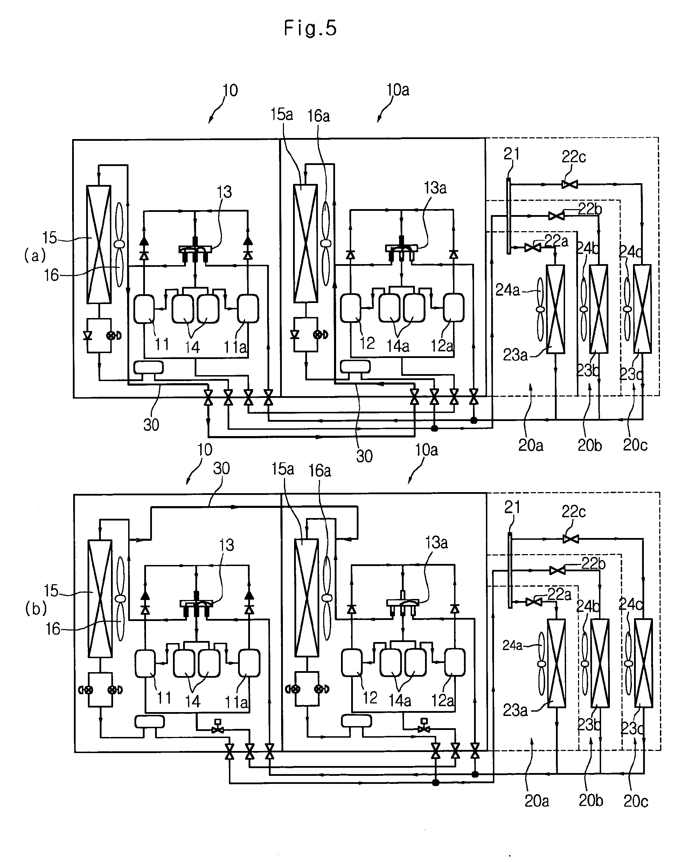

Figs. 5a and 5b shows a pressure regulating process between main and sub outdoor heat exchangers through a pressure regulating tube in a cooling mode according to an embodiment of the present invention;

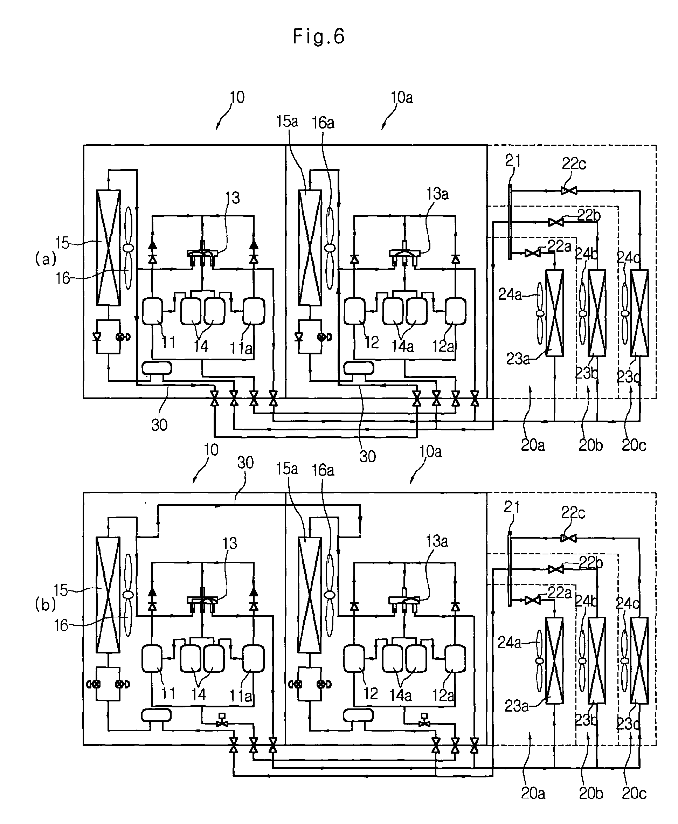

Figs. 6a and 6b shows a pressure regulating process between main and sub outdoor heat exchangers through a pressure regulating tube in a heating mode according to an embodiment of the present invention;

In the cooling mode, a high-temperature/high-pressure gaseous refrigerant discharged from the inverter and constant compressors 11 and 11a of the main outdoor unit 10 and a high-temperature/high-pressure gaseous refrigerant discharged from the constant compressor 12 of the sub outdoor unit 10a are directed to the main and sub outdoor heat exchangers 15 and 15a through four-way valves 13 and 13a.

At this point, since the main outdoor unit is designed having a large capacity as both the inverter and constant compressors 11 and 11a are driven while the sub outdoor unit is designed having a relatively small capacity as only the constant compressor 12 is driven, there is a difference in a refrigerant amount between the main compressors 11 and 11a of the main outdoor unit 10 and the constant compressor 12 of the sub outdoor unit 10a. Therefore, a pressure level of the main outdoor heat exchanger 15 becomes different from that of the sub outdoor heat exchanger 15a.

At this point, as shown in Figs. 5a and 5b, the refrigerant flows from a high pressure main side to a low pressure sub side to realize pressure equality. Then, the refrigerant flows to the main and sub outdoor heat exchangers 15 and 15a. As a result, the heat exchangers 15 and 15a are operated under an identical refrigerant pressure level.

In the heating mode, a high-temperature/high-pressure gaseous refrigerant discharged from the inverter and constant compressors 11 and 11a of the main outdoor unit 10 and a high-temperature/high-pressure gaseous refrigerant discharged from the constant compressor 12 of the sub outdoor unit 10a are directed to the indoor heat exchangers 23a, 23b and 23c and condensed therein. The condensed refrigerant is then directed to main and sub outdoor heat exchangers 15 and 15a via the expansion valves 22a, 22b and 22c. At this point, likewise the cooling mode, there is a difference in a refrigerant amount between the main compressors 11 and 11a of the main outdoor unit 10 and the constant compressor 12 of the sub outdoor unit 10a. Therefore, a pressure level of the main outdoor heat exchanger 15 becomes different from that of the sub outdoor heat exchanger 15a.

At this point, as shown in Figs. 6a and 6b, by the pressure regulating tube 30, the pressure level of the main outdoor heat exchanger 15 is equalized to that of the sub outdoor heat exchanger 15a. Therefore, the formation of the frost on the main outdoor heat exchanger 15 can be reduced or prevented. Particularly, since the amount of the refrigerant directed to the compressors 11 and 11a and 12 are equalized to each other, the accumulation amounts of the liquid refrigerant in accumulators 14 and 14a are equalized to each other, thereby improving the reliability of the air conditioner.

The pressure regulating tube 30 of the present invention can be applied to an automatic converting type multi air conditioner as well as a manual converting type multi air conditioner. When the pressure regulating tube 30 is applied to the automatic converting type multi air conditioner, the air conditioner may more enjoy the pressure regulating effect.

A method for controlling the air conditioner with the pressure regulating tube 30 to prevent the liquid refrigerant from one-sidedly flowing to one of the main compressor 11 (11a) and the sub compressor 12 (12a) in the heating mode will be described hereinafter.

The control of the air conditioner is realized based on 1) a discharge temperature of the compressors 11, 11a, 12 and 12a driven for above a predetermined time, 2) a discharge temperature predetermined according to an outdoor temperature, 3) a discharge temperature predetermined according to a vaporizing temperature.

For the descriptive convenience, the compressors 11 and 11a of the main outdoor unit will be represented as the inverter compressor 11 and the compressors 12 and 12a of the sub outdoor unit will be represented as the constant compressor 12.

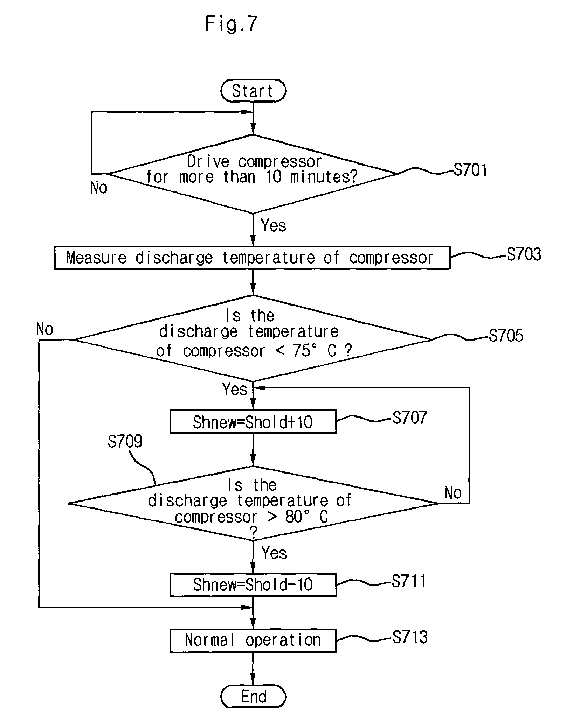

Fig. 7 is a flowchart illustrating a method for preventing liquid refrigerant from one-sidedly flow to one of the inverter and constant compressors 11 and 12 in the heating mode by comparing the discharge temperature of a compressor driven for above a predetermined time with the discharge predetermined discharge temperature according to a first embodiment of the present invention.

As shown in Fig. 7, the compressors 11 and 12 are first driven and it is determined if the compressors 11 and 12 are driven for above a predetermined time, for example, for above 10 minutes (S701).

When the compressors 11 and 12 are driven for less than 10 minutes, the refrigerant introduced from the heat exchanger (the indoor heat exchanger in the cooling mode or the outdoor heat exchanger in the heating mode) into the compressors is in a liquid state.

Accordingly, in order to determine if an operating state reaches the normal state where the refrigerant introduced into the compressors is not in the liquid state, the driving time is set at above 10 minutes. The driving time may be varied.

When the compressors 11 and 12 are driven for more than 10 minutes, a discharge temperature of the compressors 11 and 12 is measured (S703).

Then, it is determined if the measured temperature is less than a predetermined temperature 75°C (S 705).

When the measure temperature of at least one of the compressors 11 and 12 is less than 75°C and the refrigerant in the compressor is in a liquid state, the opening of the electronic expansion valve is controlled such that the discharge temperature can greater than a current super heating by 10°C (S707) . In the flowchart of Fig. 7, SH indicates the super heating, Shnew indicates a new super heating, and Shold indicates a current super heating.

By controlling the opening of the electronic expansion valve, the increase of the oil delivering amount due to the introduction of the liquid refrigerant and the damage of the compressor due to the abrasion of the compression part can be prevented.

Next, it is determined if the discharge temperature of the compressor is increased to be higher than the predetermined discharge temperature by 5°C, i.e., increased above 80°C (S709).

When the discharge temperature of the compressor is increased above 80°C, it is returned to a former super heating state for the normal operation (S711 and S713).

When the discharge temperature of the compressor is not increased above 80°C, the opening of the electronic expansion valve is repeatedly controlled until the discharge temperature of the compressor is increased to be higher than the predetermined discharge temperature by 5°C.

The predetermined temperature is not limited to 75°C, but may be varied.

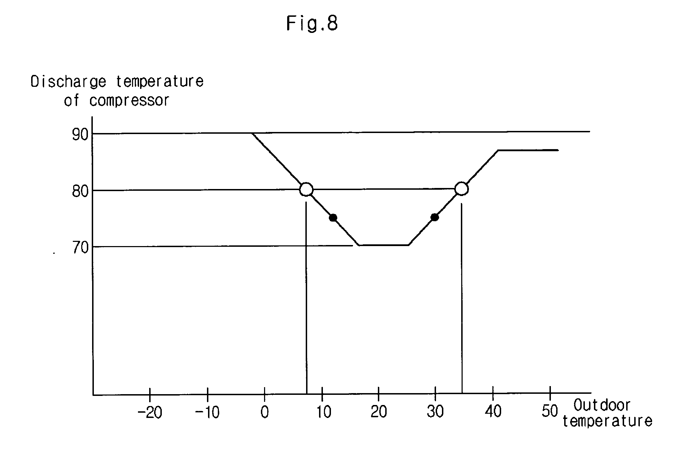

Fig. 8 shows a graph illustrating a discharge temperature considering the outdoor temperature. That is, the graph shows that the reference discharge temperature may be varied according to the outdoor temperature.

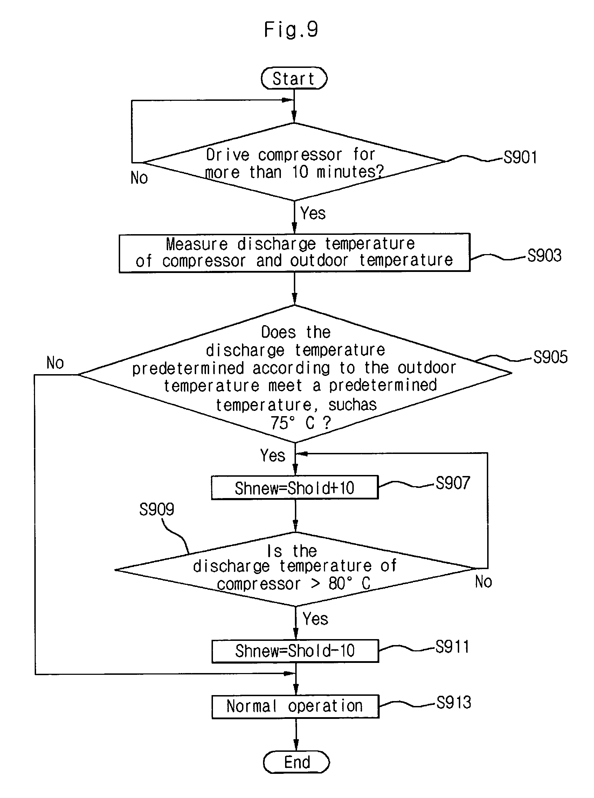

Fig. 9 shows a flowchart illustrating a method for preventing liquid refrigerant from one-sidedly flow to one of the inverter and constant compressors 11 and 12 in the heating mode by comparing a discharge temperature of the compressor driven for above a predetermined time with a discharge temperature predetermined according to an outdoor temperature according to a second embodiment of the present invention.

As shown in Fig. 9, the compressors 11 and 12 are first driven and it is determined if the compressors 11 and 12 are driven for above a predetermined time, for example, for more than 10 minutes (S901).

When the compressors 11 and 12 are driven for less than 10 minutes, the refrigerant introduced from the heat exchanger (the indoor heat exchanger in the cooling mode or the outdoor heat exchanger in the heating mode) into the compressors is in a liquid state.

Accordingly, in order to determine if an operating state reaches the normal state where the refrigerant introduced into the compressors is not in the liquid state, the driving time is set at above 10 minutes. The driving time may be varied.

When the compressors 11 and 12 are driven for more than 10 minutes, a discharge temperature of the compressors 11 and 12 and the outdoor temperature are measured (S903).

Then, it is determined if the measured temperature is less than a predetermined temperature 75°C that is predetermined according to the outdoor temperature (S905).

When the measure temperature of at least one of the compressors 11 and 12 is less than 75°C and the refrigerant in the compressor is in a liquid state, the opening of the electronic expansion valve is controlled such that the discharge temperature can be greater than a current super heating by 10°C (S907) .

By controlling the opening of the electronic expansion valve, the increase of the oil delivering amount due to the introduction of the liquid refrigerant and the damage of the compressor due to the abrasion of the compression part can be prevented.

Next, it is determined if the discharge temperature of the compressor is increased to be higher than the discharge temperature predetermined according to the outdoor temperature by 5°C, i.e., increased above 80°C (S909).

When the discharge temperature of the compressor is increased above 80°C, it is returned to a former super heating state for the normal operation (S911 and S913).

When the discharge temperature of the compressor is not increased above 80°C , the opening of the electronic expansion valve is repeatedly controlled until the discharge temperature of the compressor is increased to be higher than the predetermined discharge temperature by 5°C.

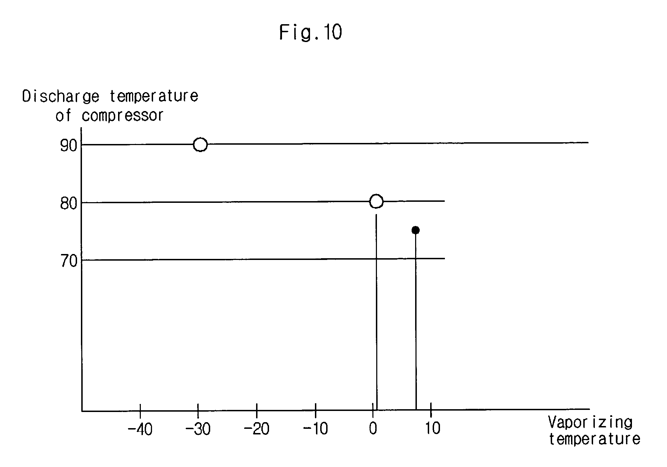

Fig. 10 shows a graph illustrating a discharge temperature considering the vaporizing temperature. That is, the graph shows that the reference discharge temperature may be varied according to the vaporizing temperature.

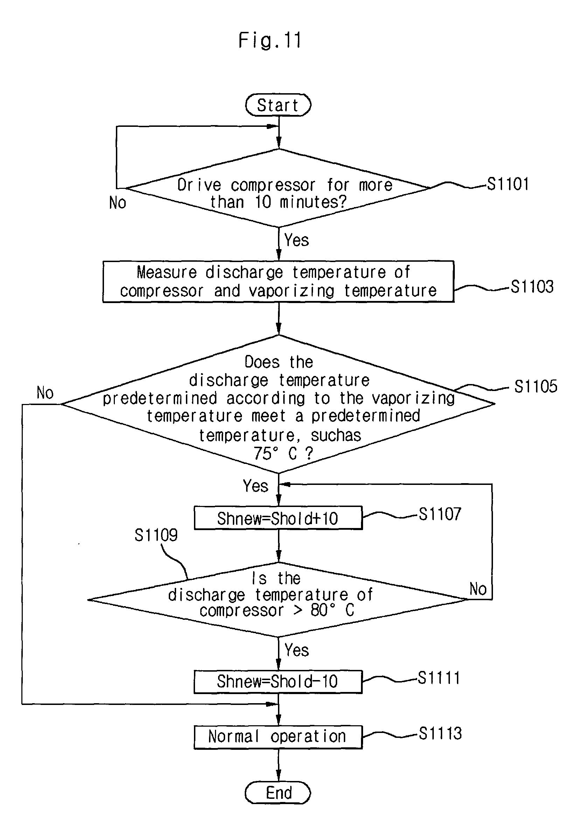

Fig. 11 shows a flowchart illustrating a method for preventing liquid refrigerant from one-sidedly flow to one of the inverter and constant compressors 11 and 12 in the heating mode by comparing a discharge temperature of the compressor driven for above a predetermined time with a discharge temperature predetermined according to a vaporizing temperature according to a third embodiment of the present invention.

As shown in Fig. 11, the compressors 11 and 12 are first driven and it is determined if the compressors 11 and 12 are driven for above a predetermined time, for example, for more than 10 minutes (S1101) .

When the compressors 11 and 12 are driven for less than 10 minutes, the refrigerant introduced from the heat exchanger (the indoor heat exchanger in the cooling mode or the outdoor heat exchanger in the heating mode) into the compressors is in a liquid state.

Accordingly, in order to determine if an operating state reaches the normal state where the refrigerant introduced into the compressors is not in the liquid state, the driving time is set at above 10 minutes. The driving time may be varied.

When the compressors 11 and 12 are driven for more than 10 minutes, a discharge temperature of the compressors 11 and 12 and the vaporizing temperature are measured (S1103).

Then, it is determined if the measured temperature is less than a predetermined temperature 75°C that is predetermined according to the vaporizing temperature (S1105).

When the measure temperature of at least one of the compressors 11 and 12 is less than 75°C and the refrigerant in the compressor is in a liquid state, the opening of the electronic expansion valve is controlled such that the discharge temperature can be greater than a current super heating by 10°C (S1107).

By controlling the opening of the electronic expansion valve, the increase of the oil delivering amount due to the introduction of the liquid refrigerant and the damage of the compressor due to the abrasion of the compression part can be prevented.

Next, it is determined if the discharge temperature of the compressor is increased to be higher than the discharge temperature predetermined according to the vaporizing temperature by 5°C, i.e., increased above 80°C (S1109).

When the discharge temperature of the compressor is increased above 80°C, it is returned to a former super heating state for the normal operation (S1111 and S1113).

When the discharge temperature of the compressor is not increased above 80°C, the opening of the electronic expansion valve is repeatedly controlled until the discharge temperature of the compressor is increased to be higher than the predetermined discharge temperature by 5°C.

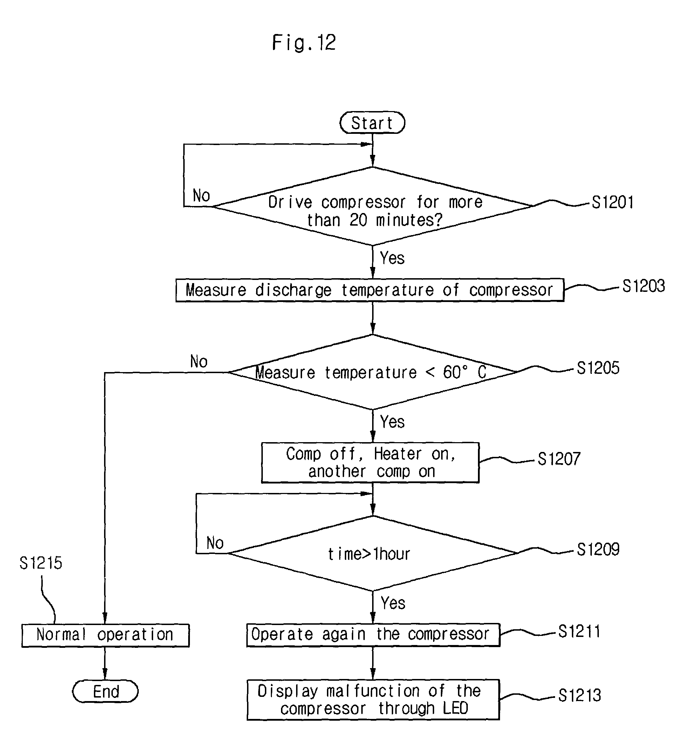

Fig. 12 shows a flowchart illustrating a method for preventing liquid refrigerant from one-sidedly flow to one of the main and sub compressors 11 and 12 in a heating mode by comparing a discharge temperature of a compressor driven for above a predetermined time with a discharge predetermined discharge temperature according to a fourth embodiment of the present invention.

As shown in Fig. 12, the compressor 11 is first driven and it is determined if the compressor 11 and 12 is driven for above a predetermined time, for example, for more than 20 minutes (S1201) .

When the compressor 11 is driven for less than 20 minutes, the refrigerant introduced from the heat exchanger (the indoor heat exchanger in the cooling mode or the outdoor heat exchanger in the heating mode) into the compressor is in a liquid state.

Accordingly, in order to determine if an operating state reaches the normal state where the refrigerant introduced into the compressor is not in the liquid state, the driving time is set at above 20 minutes. The driving time may be varied.

When the compressor 11 is driven for more than 20 minutes, a discharge temperature of the compressor 11 is measured (S1203).

Then, it is determined if the measured temperature is less than a predetermined temperature 60°C (S1205).

When the measured temperature is greater than 60°C, the current operating state is maintained (S1215).

However, when the measure temperature of the compressor 11 is less than 60°C and the operating compressor is replaced from the compressor 11 to another compressor 12, after which the compressor 11 is pre-heated by a heat disposed on a bottom of the compressor 11 to vaporize the liquid refrigerant (S1207).

That is, when the discharge temperature of the compressor 11 is less than 60°C regardless of the outdoor temperature, since the refrigerant is discharged in the liquid state even the compressing operation of the compressor 11, the compressor 11 is replaced with the compressor 12 in operation and is pre-heated by the heater to vaporize the liquid refrigerant.

Next, it is determined if the compressor 11 is pre-heated for more than 1 hour (S1209).

When the compressor 11 is pre-heated for more than 1 hour, the compressor 11 is operated again (S1211) .

However, even when the compressor 11 is operated again, if the refrigerant in the compressor is discharged in the liquid state, a malfunction of the compressor is noted through, for example, an LED so that the user can repair the compressor 11 (S1213).

As described above, as the pressure regulating tube is disposed between the main outdoor heat exchanger and the sub outdoor heat exchanger, the formation of the frost on the main outdoor heat exchanger can prevented, thereby improving the reliability of the air conditioner.

That is, the pressure regulating tube equalizes the refrigerant pressures directed to the main and sub outdoor heat exchangers, the frost is not formed on the main outdoor heat exchanger, improving the heat exchange efficiency and the reliability of the air conditioner.

In addition, after the main and sub outdoor compressors are driven for a predetermined time, the one-sided flow of the refrigerant to one of the main and sub compressors can be prevented by control factors such as the discharge temperature of the compressors, the outdoor temperature, and/or the vaporizing temperature, thereby preventing the compressors from being damaged.

Furthermore, since the equal refrigerant pressure is applied to both the main and sub sides, an effect where a capacity of the sub side is increased can be obtained.

In addition, since amounts of the liquid refrigerant accumulated in the accumulator can be equalized to each other by the pressure regulating tube, the reliability of the air conditioner can be further improved.

It will be apparent to those skilled in the art that various modifications and variations can be made in the present invention. Thus, it is intended that the present invention covers the modifications and variations of this invention provided they come within the scope of the appended claims and their equivalents.

## Claims

1. A system for controlling an air conditioner, comprising:
a plurality of outdoor units each having at least one compressor and an outdoor heat exchanger;
at least one indoor unit connected to at least one of the outdoor units by a refrigerant tube, the indoor unit having an indoor heat exchanger; and
a pressure regulating tube for equalizing pressure according to an operation mode, the pressure regulating tube being connected to the outdoor units.

2. The system according to claim 1, wherein the pressure regulating tube is varied in a connection location to the outdoor heat exchangers according to the operation mode.

3. The system according to claim 1, wherein the pressure regulating tube is connected between refrigerant tubes extending from rear ends of the heat exchangers where low pressure is formed in a heating mode.

4. The system according to claim 1, wherein the pressure regulating tube is connected between refrigerant tubes extending from front ends of the outdoor heat exchangers where high pressure is formed in a cooling mode.

5. The system according to claim 1, wherein the pressure regulating tube has a diameter less that of the refrigerant tube.

6. The system according to claim 1, wherein the outdoor units comprise first and second outdoor units, the first outdoor unit comprising an inverter compressor and a constant compressor, the second outdoor unit comprising a compressor, the number of compressors of the second outdoor unit being less than that of the first outdoor unit to generate a pressure difference between the heat exchanger of the first outdoor unit and the heat exchanger of the second outdoor unit, the pressure difference being compensated by the pressure regulating tube.

7. A method for controlling an air conditioner, comprising the steps of:
determining if a compressor is driven for more than a predetermined time;
measuring a discharge temperature of the compressor when the compressor is driven for more than the predetermined time;
comparing the measured temperature with a predetermined temperature; and
controlling an opening of an electronic expansion valve is performed to be higher than a current super heating when the refrigerant in the compressor is in a liquid state.

8. The method according to claim 7, wherein, when the measured temperature is lower than the predetermined temperature, the opening of the electronic expansion valve is controlled such that the discharge temperature can be increased to be higher than the current super heating by a predetermined level.

9. The method according to claim 7, further comprising the step of determining if the discharge temperature is increased by a predetermined level after controlling the opening of the electronic expansion valve.

10. The method according to claim 9, further comprising the step of returning to a former super heating state when the discharge temperature is increased by the predetermined level.

11. A method for controlling an air conditioner, comprising the steps of:
determining if a compressor is driven for more than a predetermined time;
measuring a discharge temperature of the compressor when the compressor is driven for more than the predetermined time;
comparing the measured temperature with a temperature predetermined according to an outdoor temperature; and
controlling an opening of an electronic expansion valve is performed to be higher than a current super heating when the measured temperature is lower than the predetermined temperature.

12. The method according to claim 11, wherein, when the measured temperature is lower than the predetermined temperature, the opening of the electronic expansion valve is controlled such that the discharge temperature can be increased to be higher than the current super heating by a predetermined level.

13. The method according to claim 11, further comprising the step of determining if the discharge temperature is increased by a predetermined level after controlling the opening of the electronic expansion valve.

14. The method according to claim 11, further comprising the step of returning to a former super heating state when the discharge temperature is increased by the predetermined level.

15. A method for controlling an air conditioner, comprising the steps of:
determining if a compressor is driven for more than a predetermined time;
measuring a discharge temperature of the compressor when the compressor is driven for more than the predetermined time;
comparing the measured temperature with a temperature predetermined according to a vaporizing temperature; and
controlling an opening of an electronic expansion valve is performed to be higher than a current super heating when the measured temperature is lower than the predetermined temperature.

16. The method according to claim 15, wherein, when the measured temperature is lower than the predetermined temperature, the opening of the electronic expansion valve is controlled such that the discharge temperature can be increased to be higher than the current super heating by a predetermined level.

17. The method according to claim 15, further comprising the step of determining if the discharge temperature is increased by a predetermined level after controlling the opening of the electronic expansion valve.

18. The method according to claim 15, further comprising the step of returning to a former super heating state when the discharge temperature is increased by the predetermined level.

19. A method for controlling an air conditioner, comprising the steps of:
driving a first compressor;
determining if the first compressor is driven for more than a predetermined time;
measuring a discharge temperature of the first compressor when the first compressor is driven for more than the predetermined time;
comparing the measured temperature with a predetermined temperature;
replacing the first compressor with a second compressor when the measured temperature is lower than the predetermined temperature; and
vaporizing liquid refrigerant in the first compressor by pre-heating in the first compressor.

20. The method according to claim 19, further comprising the step of determining if a pre-heating time is above a predetermined time.

21. The method according to claim 20, further comprising the step of operating again the first compressor to compress the refrigerant when the pre-heating time is above the predetermined time.

22. The method according to claim 21, further comprising the step of displaying a malfunction state of the first compressor when a liquid compression state is maintained even when the first compressor is operated again.
